**Europäisches Patentamt**

**European Patent Office**

**Office européen des brevets**

(19)

(11) Veröffentlichungsnummer : **0 077 459**
**B1**

# (12) EUROPÄISCHE PATENTSCHRIFT

(45) Veröffentlichungstag der Patentschrift :
28.05.86

(21) Anmeldenummer : **82108193.2**

(22) Anmeldetag : **06.09.82**

(51) Int. Cl.⁴ : **A 01 D 23/02**, A 01 D 23/06

(54) **Rübenblatterntevorrichtung.**

(30) Priorität : **15.10.81 DE 3140976**

(43) Veröffentlichungstag der Anmeldung :
**27.04.83 Patentblatt 83/17**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
EP-A- 0 026 960
DE-A- 2 929 783
DE-B- 2 443 005
DE-B- 2 834 463
DE-U- 7 629 996
DK-C-    93 245

(73) Patentinhaber : **Schulte, Werner**
**Bruchstrasse 4**
**D-4787 Geseke 3/ Langeneicke (DE)**

(72) Erfinder : **Schulte, Werner**
**Bruchstrasse 4**
**D-4787 Geseke 3/ Langeneicke (DE)**

Jouve, 18, rue St-Denis, 75001 Paris, France

**Beschreibung**

Die Erfindung betrifft eine Rübenblatterntevorrichtung, bestehend aus einem mit gezahnten Scheiben versehenen Radtaster, der an einem verschwenkbaren Tastarm drehbar gelagert ist und der das Köpfmesser führt welches am Ende des Tastarmes angeordnet ist, und einem Häcksler für das Abhäckseln des Rübenblattes, der vor dem Radtaster an geordnet ist.

Eine solche Rübenblatterntevorrichtung ist durch eine Vorbenutzung bekannt geworden, die eine lange Bauform aufweist, weil die Hintereinanderanordnung von einem Häcksler für das Rübenblatt, dahinter mit Abstand laufenden Tasträdern und einer Auffangvorrichtung erheblichen Bauraum erfordert. Denn die Aufhängung der Tasträder liegt hinter dem Häcksler. Eine lange Bauform ist nicht nur vom Gewicht her nachteilig, sondern insbesondere für die Tätigkeit der Maschine. Erfordert sie doch am Ende der Reihe einen breiten Freiraum und erschwert das Arbeiten am Hang, wo insbesondere bei nachgeschalteter Rübenrodevorrichtung entweder diese oder die Rübenblatterntevorrichtung aus der Reihe läuft. Aber auch für die Verwertung der Rübenköpfe ist eine lange Bauform nachteilig.

Bekannt ist auch eine Rübenblatterntevorrichtung, bei der zwei Häcksler vorgesehen sind, die hintereinander angeordnet sind und von denen der erste den wesentlichen Teil des Rübenblattes abhäckselt und der zweite die anschließend abgeschnittenen Rübenköpfe zerkleinert und über Umlenkbleche in die Fördervorrichtung für das Rübenblatt wirft. Zwei Häcksler stellen einen erheblichen maschinellen Aufwand dar, der nicht nur die Baulänge, sondern auch das Gewicht erhöht.

Eine erhebliche Verkürzung der Baulänge ist mit der Rübenerntevorrichtung der DE-A1 29 29 783 erreicht, bei der unmittelbar hinter dem Häcksler, der den wesentlichen Teil des Rübenblattes abhäckselt und einer Transportvorrichtung zuführt, ein aus mehreren elastischen Streifen, die an einer rotierenden Welle befestigt sind, bestehender Wischer angeordnet ist, welcher die Rübenköpfe vom Köpfmesser ergreift und in den Häcksler wirft. Das Köpfmesser ist hier an einem Schleiftaster befestigt, der sich in dem Raum zwischen und unter den Achsen von Häcksler und Wischer befindet. Solche Schleiftaster sind aber in der Landwirtschaft nicht so beliebt wie Radtaster, die die Rübe während des Abschneidens ihres Rübenkopfes besser aufrecht stehend halten. Auch ist die Messereinstellung bei einem kurzen Schlieftaster gegenüber der Rübe nicht immer ideal.

Es ist die Aufgabe der Erfindung, eine mit Radtastern ausgestattete Rübenerntevorrichtung sehr kurzer Bauform zu schaffen, die bei geringem Bauaufwand auch ein geringes Gewicht aufweist. Die Erfindung besteht darin, daß an das Messer nach hinten eine gekrümmte, das Tastrad umschließende Leitvorrichtung anschließt, deren Krümmungsradius gleich oder geringfügig größer ist als der Radius des Radtasters, daß zwischen die Tastscheiben des Radtasters eine Abstreifvorrichtung für das Abnehmen der Rübenköpfe greift, die vor dem Radtaster angeordnet bis unmittelbar vor dem Schlagkreis des entgegen dem Drehsinn des Radtasters drehenden Häckslers geführt ist und daß unterhalb dieser Abstreifvorrichtung ein Prallblech angeordnet ist, welches etwa tangential bis an den Schlagkreis des Häckslers führt. Es sind zwar aus der DK-C-93 245 und der DE-U-7 629 996 Rübenblatterntevorrichtungen bekannt, die jedoch nicht die der Erfindung zugrunde liegende Aufgabe lösen können und die folgedessen einen anderen Aufbau aufweisen.

Nach einem weiteren Merkmal meiner vorliegenden Erfindung ist es zweckmäßig, wenn der Umfang des Radtasters vom Schlagkreis des Häckslers einen Abstand von der Größe eines Rübenkopfes (weniger als 100 Millimeter) aufweist. Diese kurze Bauform läßt sich weiter dadurch erreichen, daß der Tastarm in einem Bereich dicht vor dem Schlagkreis des Häckslers oberhalb der horizontalen Ebene, in der die Häckslerwelle liegt, gelagert ist. Bei dieser Bauform verlaufen die Tragarme des Radtasters neben der Häckslervorrichtung, sodaß sie die Länge haben können, die erforderlich ist, um bei Verschwenkung der Tasträder den Anstellwinkel des Köpfmessers nur sehr geringfügig zu ändern.

Vorteilhaft ist es, wenn das Prallblech geteilt ist, ein parallel zur Häcksler- und Radtasterwelle liegendes Gelenk hat und ein Teil des Prallbleches um dieses Gelenk vom Schlagkreis des Häckslers wegklappbar ist. Auf diese Weise wird es möglich, dem Prallblech oder zumindest dem vorderen Teil des Prallbleches zwei verschiedene Stellungen zu geben : Eine Stellung in der der vordere Teil des Prallbleches wegklappbar ist, sodaß die Rübenköpfe zwischen dem Schlagkreis des Häckslers und dem Gelenk des Prallbleches hindurch fallen und auf den Acker zurück kommen — diese Stellung wird man einstellen, wenn die Rübenköpfe stark verschmutzt sind — und eine andere Stellung, in der der vordere Teil des Prallbleches im Weg der Rübenköpfe liegt und sie in den Häcksler schleudert. So wird es möglich, wahlweise die Rübenköpfe dem gehäckselten Rübenblatt zuzumischen oder sie nach unten — falls vorhanden — in einen Sammelbehälter fallenzulassen.

Um die gewählte Einstellung leicht durchführen zu können, ist es zweckmäßig, wenn am Ende des Gelenkes eine Verschwenk- und Feststellvorrichtung angeordnet ist, die an der Seite der Rübenblatterntevorrichtung eine Handkurbeloder dgl. aufweist.

Besonders vorteilhaft ist es, diese Rübenblatterntevorrichtung für zwei nebeneinander liegende Rübenreihen auszulegen, sodaß die einzelnen Aggregate, wie Häcksler, Radtaster ect.

paarweise nebeneinander liegen. In diesem Falle ist es zweckmäßig, daß die Ernte zweier paralleler Rübenreihen zwei Tastarme, jeder für eine Häckselvorrichtung zwischen zwei Häckselvorrichtungen angeordnet sind und wenn die Radtaster einseitig an den Tastarmen angebracht sind. Diese Ausgestaltung führt zu einer Einsparung des Bauraumes.

Durch die Erfindung wird somit eine sehr kurz gebaute, maschinell einfach aufgebaute Rübenblatterntevorrichtung geringen Gewichts geschaffen, die bei ihrer kurzen Bauform und ihrem geringen Gewicht hervorragend geeignet ist, um unmittelbar vor einer Rübenrodevorrichtung auf einer Rübenvollerntemaschine eingebaut zu werden. Eine mit dieser Rübenblatterntevorrichtung ausgestattete Rübenvollerntemaschine hat ebenfalls eine kurze Baulänge der Ernteaggregate und eignet sich hervorragend für das Arbeiten am Hang. Durch das geringe Gewicht und die kurze Bauweise werden die so lästigen Nickschwingungen der Tragfahrzeuge vermieden.

Das Wesen der Erfindung ist nachstehend anhand eines in der Zeichnung schematisch dargestellten Ausführungsbeispieles näher erläutert. Es zeigen :

Figur 1 eine Seitenansicht der · Rübenblatterntevorrichtung

Figur 2 eine Ansicht von oben.

Unmittelbar hinter dem Häcksler 1 mit der Häckslerwelle 2 und den Schlegeln 3, deren äußere Enden den Schlagkreis 4 beschreiben, ist der Radtaster mit mehreren gezahnten Tasträdern 5 angeordnet, der vom verschwenkbaren Tastarm 6 gezogen ist. Der Tastarm 6 ist über die Tasträderwelle 7 hinuas verlängert und trägt mit diesem seinem Endstück das Köpfmesser 8 sowie eine an das Köpfmesser 8 anschließende Leitvorrichtung 9 sowie eine Abstützkufe 13. Die Leitvorrichtung besteht zweckmäßigerweise aus parallel verlaufenden Leitstäben, die einen Rost bilden. Die Leitvorrichtung 9 ist gekrümmt und umschließt einen Teil des Umfanges der Tasträder. Zweckmäßigerweise erstreckt sie sich über einen Winkelbereich von 90° bis 130°, kann aber auch länger sein. Sie ist hinter den Tasträdern 5 angeordnet. Der Krümmungsradius der Leitvorrichtung 9 ist gleich oder geringfügig größer als der Radius der Tasträder 5, er kann auch zum Ende der Leitvorrichtung 9 zu kontinuierlich etwas größer werden. Zweckmäßigerweise wird er so groß gewählt, daß ein Rübenkopf 10, in dessen Oberfläche die Zähne der Tasträder 5 einschneiden, zwischen den Tasträdern 5 und der Leitvorrichtung 9 ausreichend Platz hat, um von den Zähnen der Tasträder 5 mitgenommen zu werden, aber so wenig Platz hat, daß er sich nicht von den Zähnen lösen kann.

Vor dem Radtaster ist eine Abstreifvorrichtung 11 angeordnet, die zweckmäßigerweise in Form eines Rostes oder Kammes ausgebildet ist, deren Stäbe bzw. Zinken zwischen die Tasträder 5 fassen, so daß die an den Zähnen hängenden oder zwischen den Tasträdern klemmenden Rübenköpfe 10 von den Tasträdern abgestreift werden. Die Abstreifvorrichtung 11 ist leicht nach vorne und unten geneigt. Sie ist bis vor den Schlagkreis 4 des Häckslers 1 geführt. Abgestreifte Rübenköpfe rutschen somit auf der Abstreifvorrichtung 11 bis zum Schlagkreis des Häckslers.

Unter der Abstreifvorrichtung 11 ist mittels eines Halters 12 ein Prallblech 14 angeordnet, das mittels des Gelenkes 15 verschwenkbar ist. Das Gelenk 15 ist vor dem hinteren Teil 16 des Prallbleches 14 angeordnet. Das Prallblech 14 kann um 180° aus der gezeichneten Stellung entlang des gestrichelt eingezeichneten Halbkreises nach hinten verschwenkt werden. In dieser nach hinten verschwenkten Stellung ist soviel Platz zwischen dem Gelenk 15 und dem Schlagkreis 4, daß die Rübenköpfe 10 durch diesen breiten Spalt zwischen dem Schlagkreis 4 und dem Gelenk 15 hindurch auf den Erdboden fallen können. Ist jedoch das Prallblech 14 nach vorne in die gezeichnete Stellung geklappt, so befindet sich die Vorderkante des Prallbleches 14 in unmittelbarer Nähe des Schlagkreises 4, so daß Rübenköpfe 10 nicht mehr durch den Spalt hindurchtreten können, sondern an dem Prallblech 14 abprallen und in den Häcksler 1 geschleudert werden. Die Stellung des Prallbleches 14 ist so, daß das Prallblech etwa parallel, jedoch nach unten versetzt zur Abstreifvorrichtung 11 liegt und daß es etwa tangential zum Schlagkreis angeordnet ist.

Der Häcksler 1 ist nach vorne und nach oben durch eine Leitvorrichtung abgedeckt, mit der das gehäckselte Gut (Rübenblatt und Rübenköpfe) in die Transportvorrichtung 18 geworfen werden, von der nur die Auffangwanne gezeichnet ist. In dieser Auffangwanne kann sich z. B. eine Transportschnecke drehen und das gehäckselte Gut achsparallel wegschieben.

Die Tastarme 6, die die Tasträder 5 und die Messer 8 mit der Leitvorrichtung 9 tragen, sind an ihrem vorderen Ende in dem Lager 19 gelagert. Dieses befindet sich vor dem Schlagkreis 4 des Häckslers 1 oberhalb der horizontalen Ebene, in der die Häckslerachse 2 liegt. Hierdurch haben die Tastarme 6 eine ausreichende Länge, um bei der kurzen gedrungen Bauform der Rübenblatterntevorrichtung sicherzustellen, daß sich der Anstellwinkel des Köpfmessers auch dann nur wenig ändert, wenn auch die Tasträder durch hochgewachsene Rüben hoch angehoben werden.

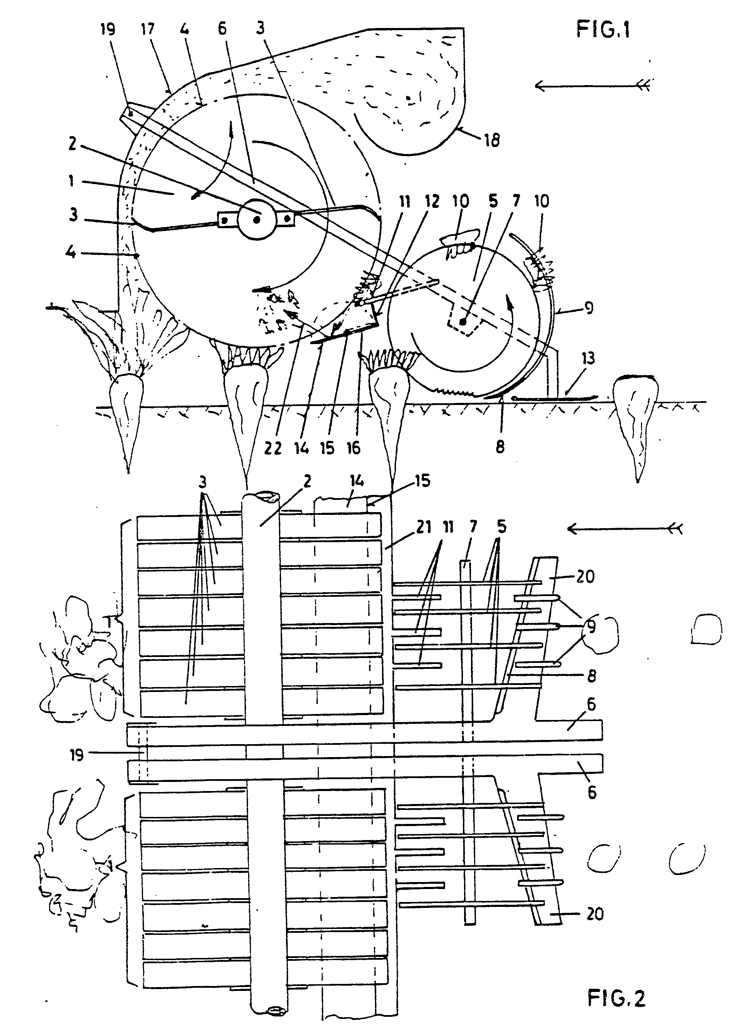

Aus Fig. 2 ist die Anordnung zweier Rübenblatterntevorrichtungen parallel zueinander für die Ernte zweier paralleler Rübenreihen in Ansicht von oben gezeigt. Zwischen den Häckslern 1 mit den Häckslerwellen 2 und den Schlegeln 3 sind in dem Lager 19 zwei Tragarme 6 gelagert. Jeweils zur einen Seite jedes Tragarmes 6 erstrecken sich Träger 20 für das Messer 8 und die Stangen der Leitvorrichtung 9 sowie Träger 21 für die Abstreifvorrichtung 11 und das Prallblech 14.

Die an einem Fahrzeug montierte Vorrichtung arbeitet folgendermaßen : Der Häcksler 1 häckselt mit seinen Schlegeln den wesentlichen Teil des Rübenblattes von den Rübenköpfen ab und wirft es in die Auffang- und Transportrinne 18. Die unmittelbar nachfolgenden Tasträder 5 laufen über die Rübenköpfe und tasten dabei deren Höhe ab. Sie heben das Köpfmesser in die zum Abschneiden der Rübenköpfe geeignete Position. Die abgeschnittenen Rübenköpfe 10 werden von den Zähnen der Tasträder 5 geführt von der Leitvorrichtung 9, mitgenommen und nach oben und vorne gefördert, bis sie von der Abstreifvorrichtung 11 von den Tasträdern 5 gelöst werden. Die Rübenköpfe 10 gleiten unter dem Einfluß der Schwerkraft auf der Oberfläche der Abstreifvorrichtung 11 bis sie den Schlagkreis 4 des Häckslers 1 erreichen, wo sie von den Schlegeln 3 einen Schlag erhalten, der sie stark beschleunigt und auf das Prallblech 14 schleudert, von dem sie in Richtung des Pfeiles 22 reflektiert werden und in den Häckseler 1 geschleudert werden, von wo sie zusammen mit dem gehäckselten Rübenblatt im gehäckselten Zustand in die Auffang- und Transportrinne gelangen. Will man jedoch die Rübenköpfe, wenn sie z. B. zu schmutzig sind, nicht im gehäckselten Rübenblatt haben, klappt man das Prallblech 14 weg (nach hinten), so daß die Rübenköpfe 10 durch den Spalt zwischen dem Gelenk 15 und dem Schlagkreis 4 auf den Erdboden fallen.

**Patentansprüche**

1. Rübenblatterntevorrichtung, bestehend aus einem mit gezahnten Scheiben versehenen Radtaster (5), der an einem verschwenkbaren Tastarm (6) drehbar gelagert ist und der das Köpfmesser (8) führt, welches am Ende des Tastarmes (6) angeordnet ist, und einen Häcksler (1) für das Abhäckseln des Rübenblattes, der vor dem Radtaster (5) angeordnet ist, dadurch gekennzeichnet, daß an das Messer (8) nach hinten eine gekrümmte, das Tastrad (5) umschließende Leitvorrichtung (9) anschließt, deren Krümmungsradius gleich oder geringfügig größer als der Radius des Radtasters (5) ist, daß zwischen die Tastscheiben des Radtasters (5) eine nach vorn und unten geneigte Abstreifvorrichtung (11) für das Abnehmen der Rübenköpfe (10) greift, die vor dem Radtaster (5) angeordnet bis unmittelbar vor den Schlagkreis (4) des entgegen dem Drehsinn des Radtasters (5) drehenden Häckslers (1) geführt ist und daß unterhalb dieser Abstreifvorrichtung (11) ein Prallblech (14) angeordnet ist, welches in etwa tangential bis an den Schlagkreis (4) des Häckslers (1) führt.

2. Rübenblatterntevorrichtung nach Anspruch 1, dadurch gekennzeichnet, daß der Umfang des Radtasters (5) vom Schlagkreis (4) des Häckslers (1) einen Abstand von der Größe eines Rübenkopfes (10) (weniger als 100 mm) aufweist.

3. Rübenblatterntevorrichtung nach Anspruch 1, dadurch gekennzeichnet, daß der Tasterarm (6) in einem Bereich dicht vor dem Schlagkreis (4) des Häckslers (1) oberhalb der horizontalen Ebene, in der die Häckslerwelle (2) liegt gelagert ist.

4. Rübenblatterntevorrichtung nach Anspruch 1, dadurch gekennzeichnet, daß das Prallblech (14, 16) geteilt ist, ein parallel zur Häcksler- (2) und Radtasterwelle (7) liegendes Gelenk (15) hat und ein Teil des Prallbleches um dieses Gelenk (15) vom Schlagkreis (4) des Häckslers (1) wegklappbar ist.

5. Rübenblatterntevorrichtung nach Anspruch 4, dadurch gekennzeichnet, daß am Ende des Gelenkes (15) eine Verschwenk- und Feststellvorrichtung angeordnet ist.

6. Rübenblatterntevorrichtung nach Anspruch 1, dadurch gekennzeichnet, daß für die Ernte zweier paralleler Rübenreihen zwei Tastarme (6), jeder für eine Häckselvorrichtung, zwischen zwei Häckslervorrichtungen (1) angeordnet sind.

**Claims**

1. A beet leaf harvester apparatus comprising a wheel sensor (5) which is provided with toothed discs and which is mounted rotatably on a pivotal sensing arm (6) and which carries the topping blade (8) which is disposed at the end of the sensing arm (6), and a cutter (1) for cutting off the beet leaf, which is disposed in front of the wheel sensor (5), characterised in that adjoining the blade (8) rearwardly thereof is a curved guide means (9) which extends around the sensing wheel (5) and whose radius of curvature is the same as or slightly larger than the radius of the wheel sensor (5), that a stripping means (11) for removing the beet tops (10) engages between the sensing discs of the wheel sensor (5), which stripping means (11) is inclined forwardly and downwardly and, arranged in front of the wheel sensor (5), is taken to directly in front of the impact circle (4) of the cutter (1) which rotates in the opposite direction to the direction of rotation of the wheel sensor (5), and that disposed below the stripping means (11) is a baffle plate (14) which extends substantially tangentially to the impact circle (4) of the cutter (1).

2. A beet leaf harvester apparatus according to claim 1 characterised in that the periphery of the wheel sensor (5) is at a spacing of the size of a beet top (10) (less than 100 mm) from the impact circle of the cutter (1).

3. A beet leaf harvester apparatus according to claim 1 characterised in that the sensing arm (6) is mounted in a region closely in front of the impact circle (4) of the cutter (1) above the horizontal plane in which the cutter shaft (2) lies.

4. A beet leaf harvester apparatus according to claim 1 characterised in that the baffle plate (14, 16) is divided and has a hinge (15) which is disposed parallel to the cutter shaft (2) and the wheel sensor shaft (7), and a portion of the baffle plate can be pivoted away from the impact circle (4) of the cutter (1) about said hinge (15).

5. A beet leaf harvester apparatus according to claim 4 characterised in that a pivoting and locking means is arranged at the end of the hinge (15).

6. A beet leaf harvester apparatus according to claim 1 characterised in that, for harvesting two parallel rows of beets, two sensing arms (6), each for a cutting apparatus, are arranged between two cutting apparatuses (1).

## Revendications

1. Dispositif pour récolter des feuilles de betteraves, constitué d'un palpeur à roues (5) doté de disques dentés, qui est monté rotatif sur un bras palpeur pivotant (6) et guide la lame décolleteuse (8) disposée à l'extrémité du bras palpeur, ainsi que d'un hache-feuilles (1) destiné à hacher les fanes des betteraves et installé devant le palpeur à roues (5), caractérisé par le fait qu'un dispositif déflecteur curviligne (9) entourant la roue palpeuse (5) se raccorde à la lame (8) vers l'arrière, le rayon de courbure de ce dispositif étant égal ou légèrement supérieur au rayon du palpeur à roues (5) ; par le fait qu'un dispositif racleur (11) incliné vers l'avant et vers le bas, permettant d'enlever les couronnes (10) des raves, s'engage entre les disques palpeurs du palpeur à roues (5), ce dispositif se trouvant devant le palpeur à roues (5) et se prolongeant jusqu'à une faible distance devant la circonférence de battage (4) du hache-feuilles ·(1) tournant dans le sens de rotation inverse du palpeur à roues (5) ; et par le fait qu'une tôle de chicane (14), installée au-dessous de ce dispositif racleur (11), s'étend à peu près tangentiellement jusqu'à la circonférence de battage (4) du hache-feuilles (1).

2. Dispositif pour récolter des feuilles de betteraves selon la revendication 1, caractérisé par le fait que le pourtour du palpeur à roues (5) est séparé de la circonférence de battage (4) du hache-feuilles (1) d'une distance de l'ordre d'une couronne (10) de betterave (moins de 100 mm).

3. Dispositif pour récolter des feuilles de betteraves selon la revendication 1, caractérisé par le fait que le bras palpeur (6) est monté dans une région située à proximité devant la circonférence de battage (4) du hache-feuilles (1), au-dessus du plan horizontal dans lequel se trouve l'arbre (2) du hache-feuilles.

4. Dispositif pour récolter des feuilles de betteraves selon la revendication 1, caractérisé par le fait que la tôle de chicane (14, 16) est subdivisée, qu'elle comporte une articulation (15) s'étendant parallèlement à l'arbre (2) du hache-feuilles et à celui (7) du palpeur à roues, et qu'une partie de la tôle de chicane peut être rabattue, autour de cette articulation (15), à l'écart de la circonférence de battage (4) du hache-feuilles (1).

5. Dispositif pour récolter des feuilles de betteraves selon la revendication 4, caractérisé par le fait qu'un dispositif de pivotement et d'immobilisation est installé à l'extrémité de l'articulation (15).

6. Dispositif pour récolter des feuilles de betteraves selon la revendication 1, caractérisé par le fait que, pour récolter deux rangs parallèles de betteraves, deux bras palpeurs (6) associés chacun à un dispositif de hachage sont interposés entre deux dispositifs hacheurs (1).

FIG.1

FIG.2